Europäisches Patentamt

European Patent Office

Office européen des brevets

(19)

(11) **EP 1 443 719 A1**

(12) **EUROPEAN PATENT APPLICATION**
published in accordance with Art. 158(3) EPC

| | |
|---|---|
| (43) Date of publication:<br>**04.08.2004 Bulletin 2004/32** | (51) Int Cl.⁷: **H04L 12/56** |
| (21) Application number: **03791202.9** | (86) International application number:<br>**PCT/JP2003/010109** |
| (22) Date of filing: **08.08.2003** | (87) International publication number:<br>**WO 2004/021651 (11.03.2004 Gazette 2004/11)** |
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | (71) Applicant: **MATSUSHITA ELECTRIC INDUSTRIAL CO., LTD.**<br>**Kadoma-shi, Osaka 571-8501 (JP)** |
| (30) Priority: **30.08.2002 JP 2002253515**<br>**06.12.2002 JP 2002355069** | (72) Inventor: **ARIMA, Takenobu**<br>**Yokohama-shi, Kanagawa 236-0042 (JP)** |
| | (74) Representative: **Grünecker, Kinkeldey, Stockmair & Schwanhäusser Anwaltssozietät**<br>**Maximilianstrasse 58**<br>**80538 München (DE)** |

(54) **PACKET TRANSMISSION SCHEDULING METHOD AND BASE STATION DEVICE**

(57)    A priority queue (111) notifies storage time at which a transmit packet was stored and the like to a timer (112). The timer (112) calculates remaining time of each packet of data and outputs to a scheduler (113). The scheduler (113) acquires receive qualities of mobile stations from a demodulator (107), calculates priority of each packet (= receive quality × 1/remaining time), and selects the queue having the packet of highest priority stored. Furthermore, the scheduler (113) decides transmit conditions such as the modulation scheme and the encoding rate according to the priority, and controls circuits such as HARQ section (116) and modulator (103). A switch (114) switches outputs of the priority queue (111). By this means, the amount of computation processing and processing time of scheduling in packet control can be reduced, and thus throughput of the communication system can be increased.

FIG.2

EP 1 443 719 A1

## Description

### TECHNICAL FIELD

The present invention relates to a method of scheduling in packet control of a radio communication system and a radio base station apparatus performing packet control according to this scheduling method.

### BACKGROUND ART

To date, as a higher speed IMT-2000 packet transmission scheme, a scheme called HSDPA (High Speed Downlink Packet Access) has been being studied for increased speed of downlink peak transmission, shorter transmission delay, higher throughput, and the like.

In this high speed packet radio communication system, services by means of various applications such as audio, video, and data transmission are expected. Hence, packet control technology allowing for a variety of QoS (Quality of Service) requirements is essential. QoS requirement values include error rates required by a higher layer, tolerable delay time, transmission rates, fluctuations, packet discard rates, and the like.

Typical of the above control technology is packet scheduling technology. The scheduling is a technology for deciding to which communication terminal a current downlink channel is assigned, where a control is performed for deciding the order of priority for transmission of packets in a single or a plurality of transmit buffers. Because this scheduling greatly affects throughput of radio communication systems, various schemes have been made.

At present, typical of the scheduling technology are three kinds: a Maximum CIR scheme (hereinafter, called Max C/I scheme), a Round Robin scheme (hereinafter, called RR scheme), and a Proportional Fairness scheme (hereinafter, called PF scheme).

The Max C/I scheme assigns transmit opportunity preferentially to an MT (mobile station) of better radio link quality. The RR scheme assigns equal transmit opportunity to all MTs. The PF scheme uses the ratio of (instantaneous radio link quality) to (average radio link quality) or the like as a metric and assigns transmit opportunity preferentially to an MT having a larger metric.

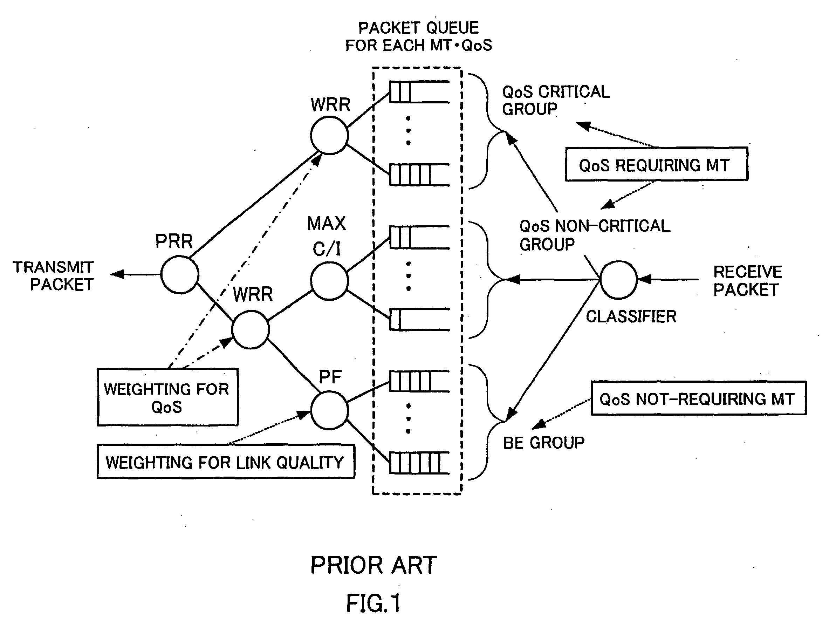

To date, there has been a radio base station apparatus performing packet control by scheduling, which is described in TECHNICAL REPORT OF IEICE MoMuC2002-3 (2002-05) from The Institute of Electronics, Information and Communication Engineers. FIG. 1 is a view illustrating the scheduling method of this radio base station apparatus.

The radio base station apparatus has a queue temporarily holding packets for each MT. When the MT uses a QoS guaranteed service and a best effort (BE) service at the same time, a queue is provided for each service class. Here, the BE service refers to a service without a delay time guarantee. Furthermore, the service classes refer to classes of QoS guarantee.

The radio base station identifies an MT and a service class from an input packet, and puts the packet into a corresponding queue. A queue for an MT providing a QoS level that has a slight margin relative to a required level belongs to a QoS critical group. A queue that sufficiently satisfies a required QoS level belongs to a QoS non-critical group. A queue for an MT that does not require QoS is classified into a BE group.

First, queues of the QoS critical group are assigned transmit opportunity at highest priority. Hence, which to select, the QoS critical group or another group, is decided according to a PRR (Priority Round Robin) scheme. That is, when a packet waiting for transmission exists in a queue of the QoS critical group, it is assigned transmit opportunity preferentially by all means even with interrupting a service for a queue of another group.

Transmit opportunity is distributed in the QoS critical group according to the implementation of the current QoS guarantee and the like. The selection between the QoS non-critical group and the BE group is made based on a surplus band distribution policy for the QoS non-critical service and the BE service, where scheduling is performed according to a WRR (Weighted Round Robin) scheme after being subjected to weighting.

Because QoS has been already guaranteed for them, the packet queues in the QoS non-critical group are scheduled according to the Max C/I scheme in order to increase system capacity as much as possible.

The packet queues in the BE group are scheduled according to the PF scheme with weighting according to the quality of radio link with the MT.

In a conventional apparatus, however, one of the Max C/I scheme, the PR scheme and the PF scheme is used depending on the service class of each packet. Hence, there is the problem that the scheduling algorithm in packet control becomes complex, thereby increasing the amount of computation processing and processing time. In this case, as a time from the notification to a base station of receive quality on a mobile station side through the transmission of data by the base station tends to be long, the change of the transmission path environment due to movement of the mobile station during the time cannot be ignored. As a result, communication cannot be performed taking into account the transmission path environment sufficiently, thus reducing throughput of the communication system.

### DISCLOSURE OF INVENTION

An object of the present invention is to reduce the amount of computation processing and processing time of scheduling in packet control and increase throughput of communication systems.

The object is achieved by a packet transmission scheduling method which, for either of data for which QoS is taken into account and data of BE, uniformly determines the order of priority by weighting priority obtained using the inverse of remaining time relative to specified transmit time and which implements scheduling in packet control by a simple algorithm.

BRIEF DESCRIPTION OF THE DRAWINGS

FIG. 1 is a view showing a scheduling method of a conventional radio base station apparatus;
FIG. 2 is a block diagram showing an example of the configuration of a radio base station apparatus according to embodiment 1 of the present invention;
FIG. 3 is a block diagram showing an example of the internal configuration of a scheduler according to embodiment 1 of the present invention;
FIG. 4 is a flow chart showing the procedure of a scheduling method according to embodiment 1 of the present invention;
FIG. 5 is a conceptual diagram for explaining the configuration of a priority queue and the outline of priorities calculated by a timer and a scheduler according to embodiment 1 of the present invention;
FIG. 6 is a block diagram showing an example of the configuration of a radio base station apparatus according to embodiment 2 of the present invention;
FIG. 7 is a block diagram showing an example of the internal configuration of a scheduler according to embodiment 2 of the present invention;
FIG. 8 is a block diagram showing an example of the internal configuration of a scheduler according to embodiment 3 of the present invention; and
FIG. 9 is a block diagram showing an example of the internal configuration of a scheduler according to embodiment 4 of the present invention.

BEST MODE FOR CARRYING OUT THE INVENTION

Embodiments of the present invention will be described in detail below with reference to the drawings. Note that while here a description will be made taking a communication system using the HSDPA scheme as an example, a scheduling method and radio base station apparatus of the present invention can be applied to other communication systems.

(Embodiment 1)

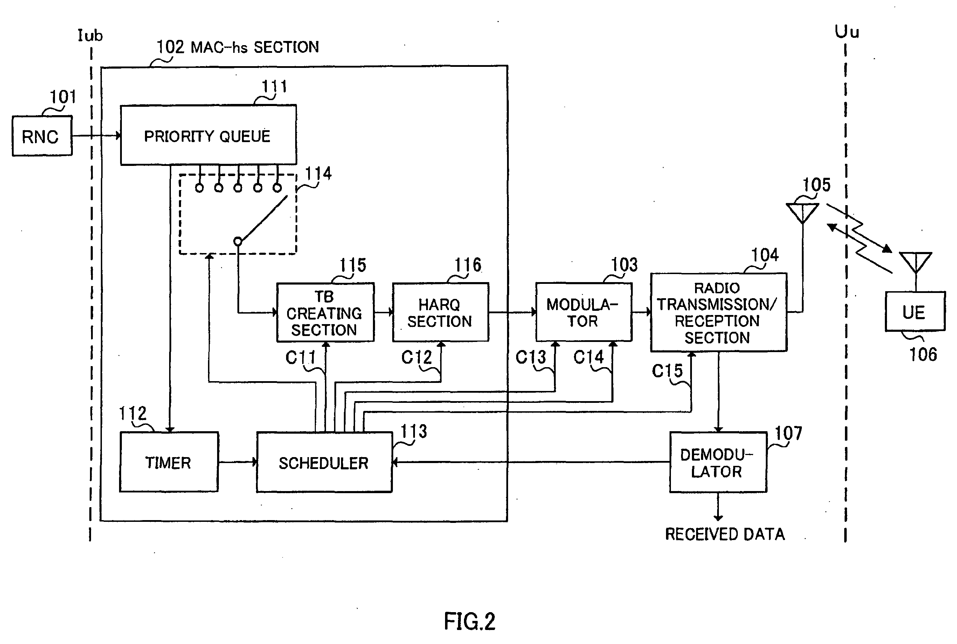

FIG. 2 is a block diagram showing an example of the configuration of a radio base station apparatus according to embodiment 1 of the present invention. Here, a description will be made taking as an example a case where the radio base station apparatus receives transmit data from a higher-level station (RNC) 101, performs scheduling, and communicates with a mobile station (UE) 106. In the figure, a dashed line Iub indicates the interface between the higher-level station and the base station, and a dashed line Uu indicates the interface between the base station and the mobile station.
The radio base station apparatus of FIG. 2 comprises MAC-hs (Medium Access Control used for high speed) section 102, modulator 103, radio transmission/reception section 104, antenna 105, and demodulator 107. The MAC-hs section 102 comprises priority queue (prioritized queue) 111, timer 112, scheduler 113, switch 114, TB (Transport Block) creating section 115, and HARQ section 116. The priority queue 111 has a number of circuits corresponding to the number of mobile stations that this radio base station apparatus can accommodate.
In the MAC-hs section 102, the priority queue 111 receives packets of data to be transmitted to the mobile station (UE) 106, from the RNC 101 via the Iub. Then, the transmit packets of data are stored in a plurality of queues provided corresponding to the priority classes (service classes) of transmit packets of data. The priority class is notified from the RNC 101 at the same time as the packet of data. Times $T_L$ corresponding to tolerable delay times in transmitting a packet are specified respectively for the plurality of queues. For each packet, the priority queue 111 notifies storage time $t_S$ at which the packet was stored, priority class of the queue in which the packet is stored, and specified time $T_L$ of the queue to the timer 112.
The timer 112 has timers corresponding to respective packets of data, and outputs remaining time $t_R$ during which each packet of data can remain in the priority queue 111 to the scheduler 113. Note that having grouped packets of data, a timer may be provided for each group. The timer is initially set to the specified time of the queue having the corresponding packet stored, and the remaining time is decremented over time. The remaining time $t_R$ may be calculated by obtaining time having elapsed since storing the packet, $(t_P - t_S)$, from storage time $t_S$ and current time $t_P$ and then subtracting it from specified time $T_L$ as follows:

$$t_R = T_L - (t_P - t_S).$$

Note that when the priority class is BE, the remaining time $t_R$ is constant without decrementing specified time $T_L$. Here, the specified time is automatically set at a value no greater than the maximum value of specified times already specified for the other queues. Note that it may be directly set at tolerable delay time of the packet.
The scheduler 113 uses remaining time output from the timer 112 and receive quality of a signal received by the mobile station to calculate priority of each packet according to the equation:

Priority = receive quality $\times$ 1/remaining time.

The queue having the packet of highest priority stored is selected, and this selected queue is notified to the switch 114. The receive quality of the signal received by the mobile station is notified by the mobile station and obtained from received data demodulated by the demodulator 107. Moreover, as remaining time $t_R$, that of the packet that has been stored earliest in each queue is used.

By using the above equation, the priority of a mobile station of better receive quality can be set higher with a smaller amount of computation processing, and thus transmission efficiency of the communication system can be improved. Furthermore, because the priority of a packet having less remaining time is set high, it becomes easier to guarantee QoS. Yet further, because the inverse of remaining time is used, as the remaining time becomes closer to zero, the priority is set greatly higher (exponentially higher). Thus, it becomes easier to meet tolerable delay time.

The scheduler 113 decides transmit conditions such as the modulation scheme and the encoding rate according to required priority, and using control signals C11, C12, C13, C4, and C15, controls the TB creating section 115, HARQ section 116, modulator 103, and radio transmission/reception section 104 respectively. The internal configuration of the scheduler 113 will be described later.

The switch 114 selects an output port corresponding to the queue selected by the scheduler 113 from among a plurality of output ports corresponding to the respective queues of the priority queue 111 to switch packets output from the priority queue 111.

The TB creating section 115 creates a TB, a unit for transmitting a plurality of packets at a time, from the packets output via the switch 114 from the priority queue 111 according to the TB size specified by control signal C11 output from the scheduler 113.

The HARQ section 116, performing re-transmit control, encodes TB (transmit data) output from the TB creating section 115 according to control signal C12 and outputs to the modulator 103. When receiving a NACK signal and thus waiting retransmission, the HARQ section 116 temporarily stores the packet waiting for retransmission in a buffer thereof, and when receiving an ACK signal, transmits it immediately at highest priority. In the HARQ process, when all packets transmittable are in a transmission wait state, the above priority computation and later processes are suspended.

The modulator 103 modulates transmit data output from the HARQ section 116 according to the modulation scheme designated by control signal C13, encodes the modulated transmit data by the encode number specified by control signal C14, and outputs to the radio transmission/reception section 104.

The radio transmission/reception section 104 performs predetermined radio transmit processing such as up-conversion on the modulated transmit data output from the modulator 103 and transmits via the antenna 105, and furthermore, performs predetermined radio receive processing such as down-conversion on a signal received via the antenna 105 and outputs to the demodulator 107.

The demodulator 107 demodulates the received signal output from the radio transmission/reception section 104 to obtain received data and extracts receive quality of the mobile station side from the received data and outputs to the scheduler 113.

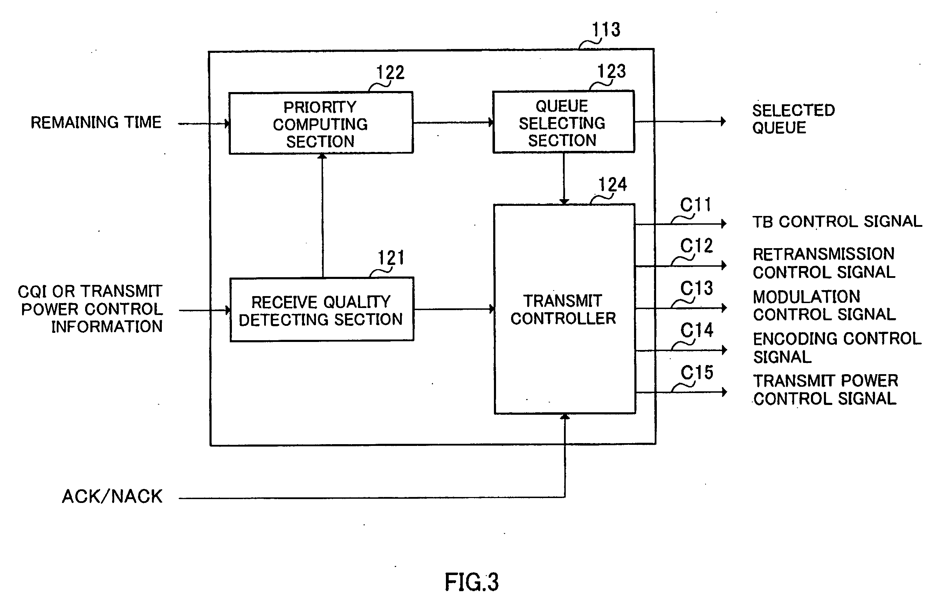

FIG. 3 is a block diagram showing an example of the internal configuration of the scheduler 113. The scheduler 113 comprises receive quality detecting section 121, priority computing section 122, queue selecting section 123, and transmit controller 124.

The receive quality detecting section 121 detects receive quality from CQI (Channel Quality Indicator), link quality information, of the mobile station side extracted from the received data demodulated by the demodulator 107. The CQI is information indicating a transmission rate and the like receivable by the mobile station, which the mobile station notifies to the base station in communication therewith and is determined based on receive quality of the mobile station. Here, receive quality used on the base station side may be estimated CIR or the like, or the CQI value having 30 levels may be used as it is.

Used as link quality information can be CQI based on CIR (Carrier to Interference Ratio) of a common pilot channel (CPICH) measured at the mobile station, or transmit power of A-DPCH (Associated-Dedicated Physical Channel) whose transmit power is controlled, or the like. The reason why the transmit power can be used is that, when the receive quality on the mobile station side is poor, the transmit power on the base station side increases according to requests from the mobile station side.

The priority computing section 122 is notified of remaining time $t_R$ from the timer 112 and of receive quality from the receive quality detecting section 121, and thus calculates priority for each packet according to the existing equation:

Priority = receive quality $\times$ 1/remaining time,

and outputs to the queue selecting section 123.

The queue selecting section 123 selects the packet having the highest priority from among the notified priorities for the respective packets and notifies the queue having the packet stored to the switch 114 and the transmit controller 124.

The transmit controller 124 is notified of receive quality from the receive quality detecting section 121, the ACK/NACK signal from the demodulator 107, and the selected queue from the queue selecting section 123. The transmit controller 124 then determines transmit conditions, namely TB size, HARQ retransmission control, modulation scheme, and transmit power, based on the selected queue by the queue selecting section 123. The transmit controller 124 sends TB control signal C11 to the TB creating section 115, retransmission control signal C12 to the HARQ section 116, modulation control signal C13 and encoding control signal C14 to the modulator 103, and transmit power control signal C15 to the radio transmission/reception section 104 for controlling each circuit.

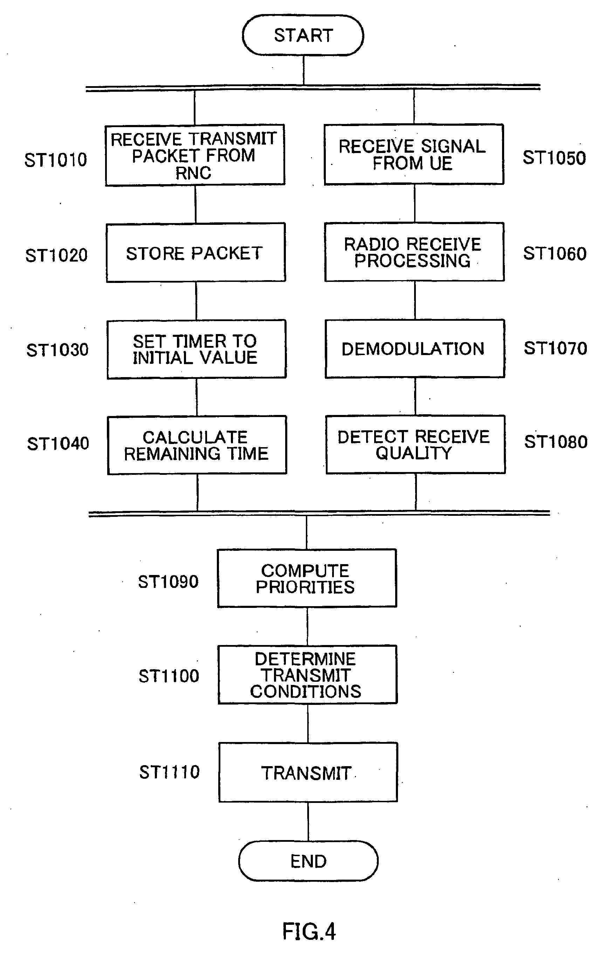

FIG. 4 is a flow chart illustrating the summarized procedures of a scheduling method used by the above radio base station apparatus.

The radio base station apparatus receives a transmit packet from the RNC 101 (ST1010), stores in the priority queue 111 (ST1020), then simultaneously sets the timer 112 to an initial value (ST1030), and starts to calculate remaining time $t_R$, that is, to measure time (ST1040). Meanwhile, the radio base station apparatus receives a signal transmitted from the UE 106 by the antenna 105 (ST1050), performs radio receive processing by the radio transmission/reception section 104 (ST1060), demodulates received data by the demodulator 107 (ST1070), and detects information about receive quality of the mobile station side (ST1080).

After acquiring remaining time $t_R$ and receive quality, the scheduler 113 computes priorities of transmit packets (ST1090), and after determining a packet to be actually transmitted, determines transmit conditions for the transmit packet (ST1100). Then, the radio base station apparatus transmits the transmit packet to the mobile station based on the transmit conditions (ST1110).

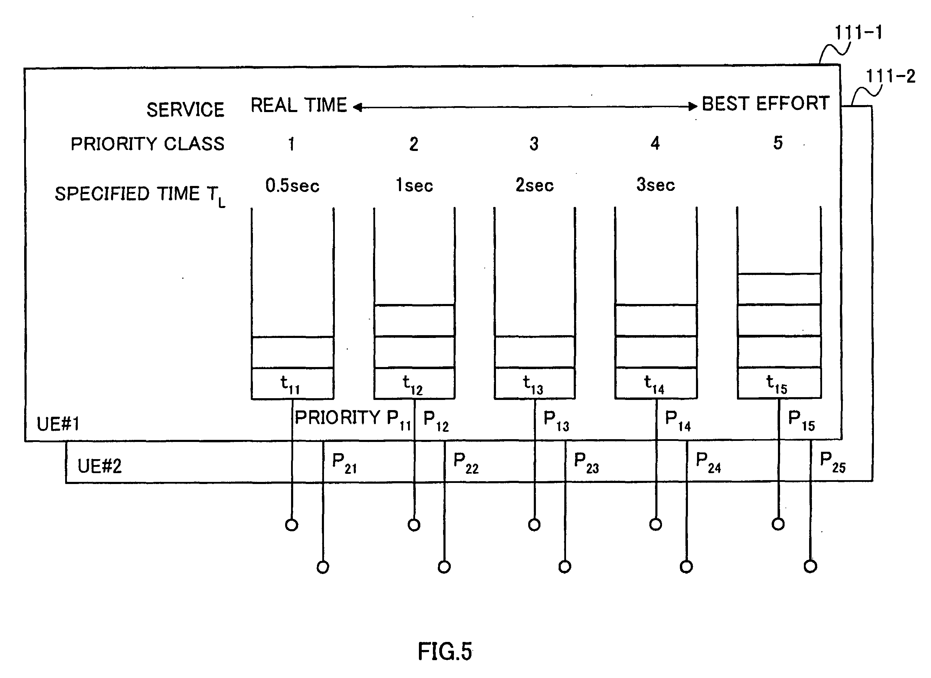

FIG. 5 is a conceptual diagram for explaining the configuration of the priority queue 111 and the outline of priorities calculated by the timer 112 and the scheduler 113. Although a description will be made taking as an example the case where the priority queue 111 has priority queue 111-1 for UE#1 and priority queue 111-2 for UE#2, the priority queue 111 is not limited in configuration to this, but can perform processing for two or more mobile stations. Moreover, the number of queues is not limited to five.

The priority queue 111 provides priority classes #1 to #5, ranging from a service strictly requiring real-timeness to a BE-type service, and has five queues #1 to #5 corresponding to the respective priority classes. For each queue, specified time $T_L$ has been specified based on tolerable delay time. While for a service of a higher degree of real-timeness, specified time $T_L$ is set shorter, for a service closer to the BE service (priority class 5) specified time $T_L$ is set longer.

Let $t_{ij}$ be remaining time of the packet stored earliest of packets stored in queue #j of UE#i, for example, $t_{11}$ to $t_{15}$ be remaining times of queue #1 to #5 of UE#1, and $t_{21}$ to $t_{25}$ be remaining times of queue #1 to #5 of UE#2. Priority $P_{ij}$ of the packet stored in queue #j of UE#i is expressed as follows:

$$P_{ij} = CIR\#i \times 1/ t_{ij},$$

where CIR#i is receive quality and $t_{ij}$ is remaining time. This takes as an example the case where CIR calculated for each UE is used as the receive quality.

The scheduler 113 calculates priority $P_{ij}$ for each queue of the priority queue 111 to select the queue having the highest priority. Note that remaining times $t_R$ of packets having not been transmitted are not reset in the next TTI (Transmission Timing Interval).

In the above configuration, the scheduler 113 determines priority with which to transmit a packet according to the single method, whatever priority class it belongs to. Specifically, the priority computing section 122 determines priority of each packet as follows: raises the priority of a transmit packet for a mobile station of better receive quality based on receive qualities of the mobile stations detected by the receive quality detecting section 121, and furthermore raises the priority of a packet having less remaining time calculated by the timer 112 and further raises the priority of a packet having remaining time closer to zero.

As described above, according to the present embodiment, the amount of computation processing and processing time of scheduling in packet control can be reduced, and thus throughput of the communication system can be increased.

Note that although the description has been made taking as an example the case where transmit data is sent from the higher-level station (RNC), in the case of a non-hierarchically structured network such as the Internet, transmit data is sent from the router.

Moreover, although the description has been made taking the case where specified times $T_L$ is set by the priority queue 111 and the scheduler 113, it may be that the higher-level station signals information indicating specified times and the scheduler 113 calculates priorities using this information.

Furthermore, although the description has been made taking as an example the case where in HARQ process, when a packet is put in a retransmission wait state because of receiving the NACK signal, the HARQ temporarily stores the packet waiting for retransmission in a buffer thereof and, when receiving the ACK signal, transmits it immediately, the HARQ may start with priority computation again for re-transmitting the packet. In this case, the timer for the packet waiting for retransmission continues to measure remaining time $t_R$ as the timers for the other packets and the priority comparison including the others is performed. Note that even when the packet waiting for retransmission is selected, if still in the retransmission wait state, transmit process does not start and the scheduler 113 calculates priority of a packet of data stored next in the same queue.

Moreover, the number of retransmission times and the like in HARQ process can be used as a parameter denoting the same idea in stead of the remaining time in the equation for calculating priority, which will be described in detail in embodiment 4.

(Embodiment 2)

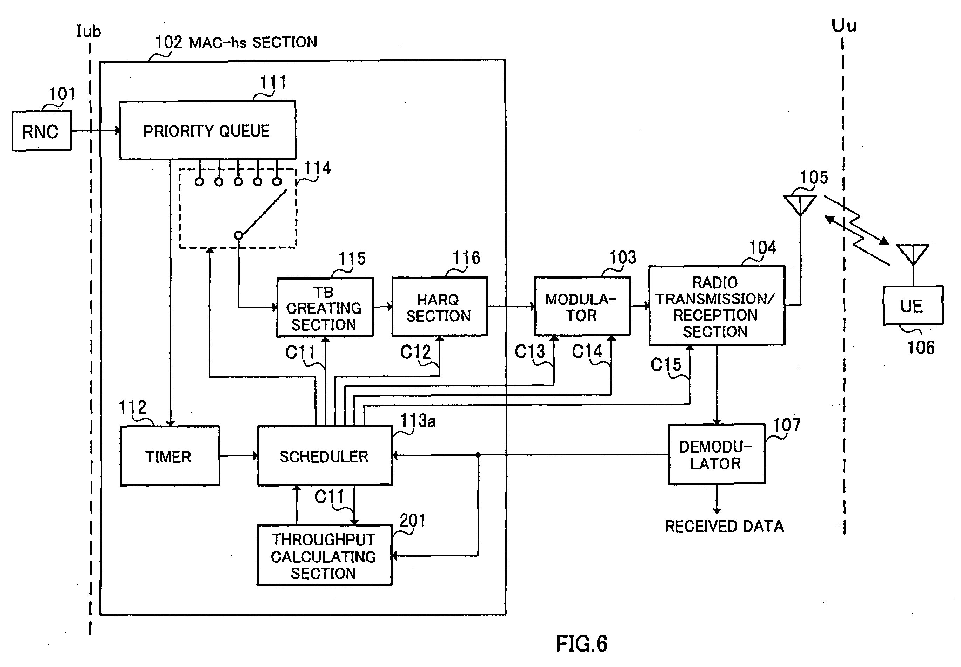

FIG. 6 is a block diagram showing an example of the configuration of a radio base station apparatus according to embodiment 2 of the present invention. This radio base station apparatus has the same basic configuration as the radio base station apparatus of FIG. 2. The same constituents are indicated by the same reference numerals, and a description thereof is omitted.

A feature of the present embodiment is that it further comprises a throughput calculating section 201, and that a scheduler 113a determines priorities taking into account the actual throughput of a mobile station as well.

The throughput calculating section 201 monitors the output of the demodulator 107, calculates the actual throughput of a mobile station in transmitting data to the base station, and outputs to the scheduler 113a. The actual throughput may be an average over a predetermined time period, or another parameter denoting the same idea.

The scheduler 113a, using remaining time $t_R$ output from the timer 112, receive quality of the mobile station side output from the demodulator 107, and the actual throughput output from the throughput calculating section 201, calculates priority for each packet according to the equation:

$$\text{Priority} = \text{receive quality} \times (1/\text{remaining time}) \times$$

$$(1/\text{actual throughput}).$$

Also the scheduler 113a performs transmit control as in embodiment 1.

The different point from embodiment 1 is that TB control signal C11 is sent to the throughput calculating section 201 as well, which calculates throughput using the TB size notified by this control signal.

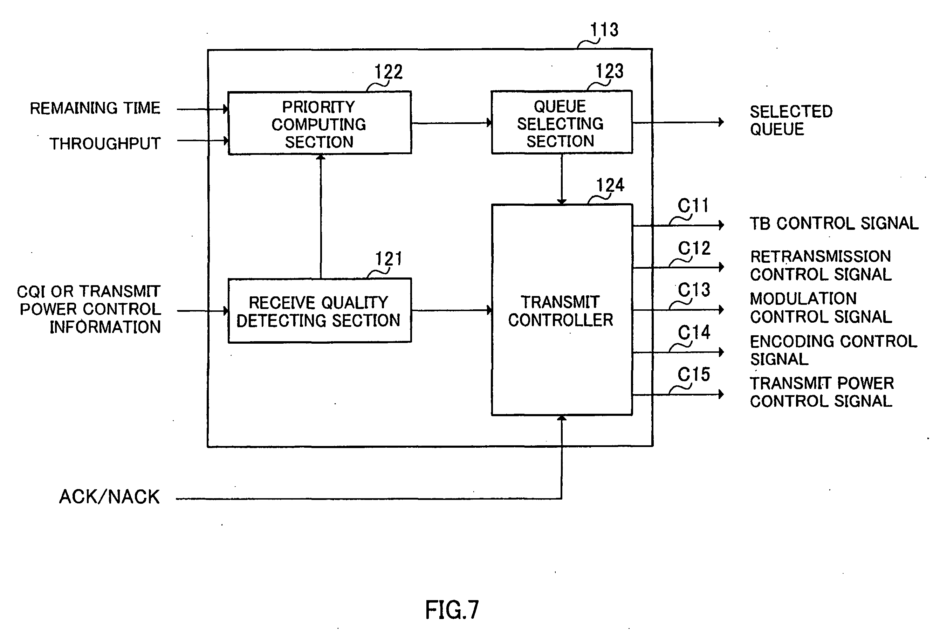

FIG. 7 is a block diagram showing an example of the internal configuration of the scheduler 113a. The actual throughput output from the throughput calculating section 201 is input into a priority computing section 122a, which calculates priority as in embodiment 1. Note that as the receive quality, one calculated for each UE is used and as the throughput, one calculated for each queue is used.

With the above configuration, because of calculating priority based on the above equation, it can be expected that the priority computing section 122a in the scheduler 113a produces the same effect as the PF scheme as well as the effect of embodiment 1. This is because part of the above equation (receive quality × 1/actual throughput) is the same as the metric in the PF scheme.

As described above, according to the present embodiment, the amount of computation processing and processing time of scheduling in packet control can be reduced, and thus throughput of the communication system can be increased. In addition, the same effect of assigning transmit opportunity taking into account fairness in throughput as well as link quality as that of the PF scheme can be produced.

(Embodiment 3)

A radio base station apparatus according to embodiment 3 of the present invention has the same basic configuration as the radio base station apparatus of FIG. 6. The same constituents are indicated by the same reference numerals, and a description thereof is omitted.

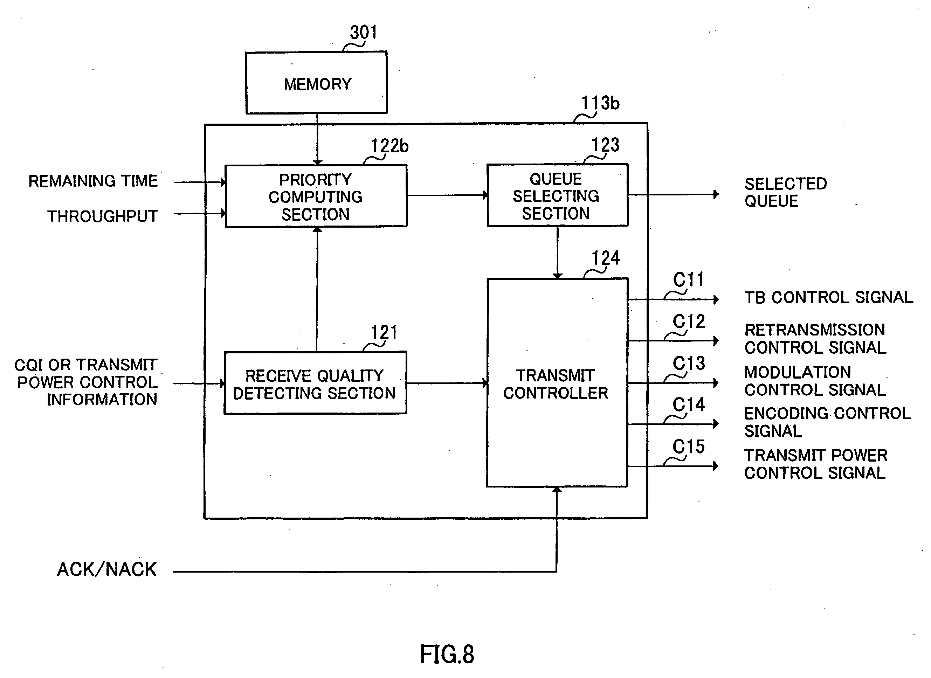

A feature of the present embodiment is that a scheduler 113b has memory 301 therein. FIG. 8 is a block diagram showing an example of the internal configuration of the scheduler 113b.

The memory 301 of the scheduler 113b outputs stored coefficients α and β to a priority computing section 122b, the values of which will be described later.

The priority computing section 122b, using remaining time $t_R$ output from the timer 112, receive quality of the mobile station side output from the demodulator 107, the actual throughput output from the throughput calculating section 201, and coefficients α and β output from the memory 301, calculates priority for each packet according to the equation:

$$\text{Priority} = \text{receive quality} \times (\alpha \times 1/\text{remaining time}) \times$$

$$(\beta \times 1/\text{actual throughput}).$$

Here, α and β are coefficients for weighting remaining time and actual throughput in the above equation. For example, when throughput that the mobile station requests from the base station varies depending on the type of packet, by setting β at a value according to the type of packet, priority can be weighted according to the type of packet beforehand. Here, the type of packet refers specifically to the service class, for example. Furthermore, for example, when assuming a conditional case where at least the specified time must be met by all means even though the throughput requested by the mobile station may not be satisfied, the contribution of the remaining time in calculating a priority becomes greater by setting α at a larger value compared with β, and consequently, it leads to the calculation of the priority with a greater importance on the specified time.

As described above, according to the present embodiment, because the computation of a priority is performed with weighting on the remaining time and the actual throughput, it is possible to perform a priority computation appropriately in accordance with a situation by setting the weights at appropriate values taking the ratio thereof into account.

Note that although it is described herein taking an example case where the specified time is set at a value varying from a priority class to another class, according to the above equation, it is alternatively possible to set the above β at a value varying from a priority class to another, while setting all specified times at the same value.

Furthermore, the above weight coefficients α and β may be set by signaling from the higher-level apparatus, or may be changed by the base station over time according to the traffic situation and the like.

Moreover, in embodiments 1 to 3, instead of the remaining time described above, it is possible to select, as the parameter, the staying time of a packet in a queue, that is, the elapsed time from a point in time at which the packet was stored in the buffer to another point in time at which it is actually transmitted. In this case, because it is in inverse proportion to the remaining time, the equation for calculating priority for embodiment 1 is as follows:

$$\text{Priority} = \text{receive quality} \times \text{staying time}.$$

Likewise, the equation for the other embodiments can be obtained. The principle is that there are almost no differences in scheduling results between queues for which the specified time is set at almost the same, whether priority is determined based on the remaining time or the staying time. Furthermore, even for queues for which the specified time is set differently, the same effect can be obtained by, for example, weighting each parameter according to the specified time as in embodiment 3.

(Embodiment 4)

A radio base station apparatus according to embodiment 4 of the present invention has the same basic configuration as the radio base station apparatus of FIG. 2. Hence, the same constituents are indicated by the same reference numerals, and a description thereof is omitted.

A feature of the present embodiment is that a priority computing section 122c of a scheduler 113c computes priority based on receive quality and the number of retransmission times for each transmit packet. In other words, the present embodiment uses the number of retransmission times for the packet instead of remaining time $t_R$ used in embodiment 1.

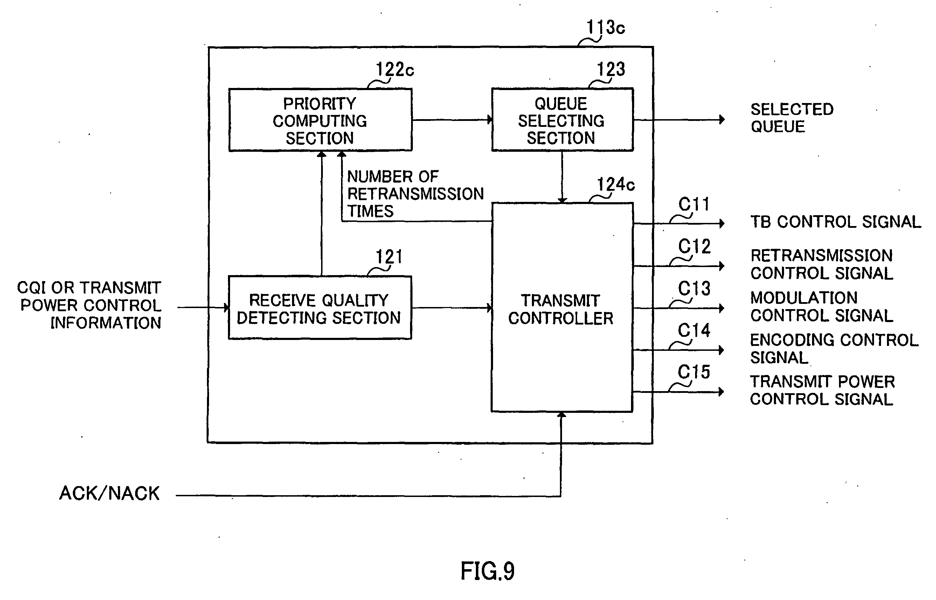

FIG. 9 is a block diagram showing an example of the internal configuration of the scheduler 113c.

The transmit controller 124c of the scheduler 113c counts the numbers of times to have retransmitted, performing retransmission control of transmit packets, and then outputs the number of retransmission times for each transmit packet to the priority computing section 122c.

The priority computing section 122c, using the number of retransmission times output from the transmit controller 124c, receive quality output from the receive quality detecting section 121, calculates priority for each packet according to the equation:

$$\text{Priority} = \text{receive quality}$$

$$\times \text{ the number of retransmission times.}$$

In the above configuration, the packets received by the base station from the RNC 101 are stored in separate queues provided for the respective priority classes. For each queue, specified time $T_L$ corresponding to tolerable delay time in transmitting packets, that is, maximum time during which the packets can stay in the queue is set. If a packet was not transmitted after the specified time $T_L$ has elapsed, the priority queue 111 discards the packet. This is because, for example, in the case where the transmit data is data high in real-timeness, the data may be completely meaningless when arriving at the receiving side after a predetermined time has elapsed. Meanwhile, the transmit controller 124c performs retransmission control of packets by outputting control signal C12 to the HARQ section 116. During this control, the transmit controller 124c also counts the number of retransmission times, and discards the packets for which the number of retransmission times has become greater than a specified number of times to retransmit set beforehand, that is, the maximum tolerable number of times to retransmit. It can be said that this specified number of times to retransmit performs time management for transmit data as the specified time.

Here, remaining time $t_R$ used in embodiment 1 refers to remaining time relative to specified time $T_L$ at the time when a certain time has elapsed after the packet was stored in the queue. A parameter that corresponds to this remaining time, in the case of the specified number of times to retransmit, is a value obtained by subtracting the number of retransmission times at the time when a certain time has elapsed after the packet was stored in the queue from the specified number of times (maximum number of times) to retransmit. That is, it can be said that for the specified number of times to retransmit, the remaining number of times to retransmit is a parameter representing the same idea as the remaining time. Here, the equation expressing priority is as follows:

$$\text{Priority} = \text{receive quality}$$

$$\times 1/(\text{remaining number of times to retransmit}),$$

which is similar to that of embodiment 1. By this means, packets having a smaller remaining number of times to retransmit can be transmitted at higher priority.

Furthermore, instead of the above remaining number of times to retransmit, simply the number of retransmission times can be selected as the parameter. In this case, because it is in inverse proportion to the remaining number of times, the equation for calculating priority is written as follows:

$$\text{Priority} = \text{receive quality} \times \text{number of retransmission times.}$$

By this means, packets having a larger number of retransmission times can be transmitted at higher priority. In the present embodiment, the specific example has been described where the number of retransmission times is used, but the remaining number of times to retransmit relative to the specified number of times to retransmit may be used.

As described above, according to the present embodiment, because the computation of a priority is performed based on the number of retransmission times and receive quality, it is possible to transmit, with a higher priority, packets undergoing a larger number of retransmission attempts and thus a higher possibility of discarding thereof in future.

Moreover, the number of retransmission times is a parameter similar to the remaining time, but is not exactly the same. Hence, the present embodiment may be combined with another embodiment. For example, in the case of combining with embodiment 1, the equation for calculating priority is as follows:

$$\text{Priority} = \text{receive quality} \times (1/\text{remaining number}) \times \text{number of retransmission times.}$$

Likewise, the equation can be obtained for the case of combining with another embodiment. By this means, such transmit scheduling that both the specified time and the specified number of times to retransmit are satisfied directly can be realized.

Moreover, in the above embodiments, the equation for calculating priority is formed by multiplication, but not being limited to this, may be formed by addition.

As described above, according to the present invention, the amount of computation processing and processing time of scheduling in packet control can be reduced, and thus throughput of the communication system can be increased.

The present description is based on Japanese Patent Application No. 2002-253515 filed on August 30, 2002 and Japanese Patent Application No.

2002-355069 filed on December 6, 2002, which are herein incorporated by reference.

INDUSTRIAL APPLICABILITY

The present invention can be applied to a method of scheduling in packet control of a radio communication system and a radio base station apparatus performing packet control according to this scheduling method.

**Claims**

1. A packet transmission scheduling method, comprising:

   a computing step of computing a priority with which a packet is transmitted regardless of a type of the packet based on a remaining time relative to a delay time tolerable when a base station transmits the packet to a mobile station,

   wherein a packet transmission scheduling for the packet is performed using the priority computed in said computing step.

2. The packet transmission scheduling method according to claim 1, further comprising:

   a detecting step of detecting a link quality between the base station and the mobile station,

   wherein said computing step computes the priority further based on the detected link quality in addition to the remaining time.

3. The packet transmission scheduling method according to claim 2, wherein said computing step computes priority to be raised when said remaining time is less.

4. The packet transmission scheduling method according to claim 2, wherein said computing step computes priority to be exponentially raised when said remaining time is closer to zero.

5. The packet transmission scheduling method according to claim 2, wherein said computing step computes said priority using a ratio of the detected link quality to said remaining time.

6. The packet transmission scheduling method according to claim 5, wherein said computing step computes said priority using the product of said ratio and the inverse of past throughput of said mobile station.

**7.** The packet transmission scheduling method according to claim 6, wherein said computing step, when throughput that said mobile station requests from said base station varies depending on the type of said packet, weights the inverse of past throughput of said mobile station according to the type of said packet.

**8.** The packet transmission scheduling method according to claim 7, wherein said computing step weights said remaining time.

**9.** The packet transmission scheduling method according to claim 2, wherein said computing step uses elapsed time from when said packet was stored in a buffer instead of said remaining time.

**10.** The packet transmission scheduling method according to claim 2, wherein said computing step uses number of retransmission times for said packet or remaining number of times to retransmit relative to maximum number of times to retransmit tolerable when transmitting said packet to said mobile station instead of said remaining time.

**11.** A base station apparatus comprising:

a computing section that computes priority with which to transmit a packet regardless of the type of said packet based on remaining time relative to delay time tolerable when transmitting said packet to a mobile station,

wherein packet transmission of said packet is scheduled using the priority computed by said computing section.

**12.** The base station apparatus according to claim 11, further comprising:

an acquiring section that acquires link quality between its own station and said mobile station,

wherein said computing section computes said priority based on the acquired link quality as well as said remaining time.

**13.** The base station apparatus according to claim 12, wherein said computing section computes priority to be raised when said remaining time is less.

**14.** The base station apparatus according to claim 12, wherein said computing section computes priority to be exponentially raised when said remaining time is closer to zero.

**15.** The base station apparatus according to claim 12, wherein said computing section computes said priority using a ratio of the acquired link quality to said remaining time.

**16.** The base station apparatus according to claim 15, wherein said computing section computes said priority using the product of said ratio and the inverse of past throughput of said mobile station.

**17.** The base station apparatus according to claim 16, wherein said computing section, when throughput that said mobile station requests varies depending on the type of said packet, weights the inverse of past throughput of said mobile station according to the type of said packet.

**18.** The base station apparatus according to claim 17, wherein said computing section weights said remaining time.

**19.** The base station apparatus according to claim 12, which is notified of delay time tolerable when transmitting a packet to said mobile station, from a higher-level station thereof.

**20.** The base station apparatus according to claim 12, wherein said computing section uses elapsed time from when said packet was stored in a buffer instead of said remaining time.

**21.** The base station apparatus according to claim 12, wherein said computing section uses number of retransmission times for said packet or remaining number of times to retransmit relative to maximum number of times to retransmit tolerable when transmitting said packet to said mobile station instead of said remaining time.

**22.** A packet transmission scheduling program which makes a computer execute the steps of:

detecting link quality between a base station and a mobile station;
computing priority with which to transmit a packet regardless of the type of said packet based on the detected link quality and remaining time relative to delay time tolerable when said base station transmits said packet to said mobile station; and
scheduling packet transmission of said packet using the priority computed in said computing step.

PACKET QUEUE
FOR EACH MT·QoS

WRR

PRR

MAX
C/I

WRR

PF

TRANSMIT
PACKET

WEIGHTING FOR
QoS

WEIGHTING FOR LINK QUALITY

QoS CRITICAL
GROUP

QoS REQUIRING MT

QoS NON-CRITICAL
GROUP

RECEIVE
PACKET

CLASSIFIER

QoS NOT-REQUIRING MT

BE GROUP

PRIOR ART

FIG.1

EP 1 443 719 A1

FIG.2

FIG.3

EP 1 443 719 A1

START

ST1010 — RECEIVE TRANSMIT PACKET FROM RNC

ST1020 — STORE PACKET

ST1030 — SET TIMER TO INITIAL VALUE

ST1040 — CALCULATE REMAINING TIME

ST1050 — RECEIVE SIGNAL FROM UE

ST1060 — RADIO RECEIVE PROCESSING

ST1070 — DEMODULATION

ST1080 — DETECT RECEIVE QUALITY

ST1090 — COMPUTE PRIORITIES

ST1100 — DETERMINE TRANSMIT CONDITIONS

ST1110 — TRANSMIT

END

FIG.4

FIG.5

FIG.6

FIG.7

EP 1 443 719 A1

FIG.8

EP 1 443 719 A1

FIG.9

## INTERNATIONAL SEARCH REPORT

International application No.

PCT/JP03/10109

A. CLASSIFICATION OF SUBJECT MATTER
Int.Cl⁷ H04L12/56

According to International Patent Classification (IPC) or to both national classification and IPC

B. FIELDS SEARCHED

Minimum documentation searched (classification system followed by classification symbols)
Int.Cl⁷ H04L12/56, H04L12/28

Documentation searched other than minimum documentation to the extent that such documents are included in the fields searched
Jitsuyo Shinan Koho        1922–1996   Toroku Jitsuyo Shinan Koho   1994–2003
Kokai Jitsuyo Shinan Koho  1971–2003   Jitsuyo Shinan Toroku Koho   1996–2003

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 56-110370 A (Hitachi, Ltd.), 01 September, 1981 (01.09.81), | 1-4,9-14, 19-22 |
| A | Page 2, lower left column, lines 1 to 10; Fig. 4 (Family: none) | 5-8,15-18 |
| Y | JP 2002-51375 A (Matsushita Electric Industrial Co., Ltd.), | 1-4,9-14, 19-22 |
| A | 15 February, 2002 (15.02.02), Par. No. [0040]; Fig. 1 & WO 01/91332 A1   & AU 200158813 A & EP 1195921 A1   & CN 1381106 A | 5-8,15-18 |
| Y | JP 8-186577 A (Matsushita Electric Industrial Co., Ltd.), 16 July, 1996 (16.07.96), Par. Nos. [0025], [0026] (Family: none) | 9 |

☒ Further documents are listed in the continuation of Box C.   ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
29 September, 2003 (29.09.03)

Date of mailing of the international search report
14 October, 2003 (14.10.03)

Name and mailing address of the ISA/
Japanese Patent Office

Authorized officer

Facsimile No.

Telephone No.

Form PCT/ISA/210 (second sheet) (July 1998)

## INTERNATIONAL SEARCH REPORT

| | International application No. |
|---|---|
| | PCT/JP03/10109 |

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2000-354065 A  (Mitsubishi Electric Corp.),<br>19 December, 2000 (19.12.00),<br>Par. Nos. [0035] to [0040]; Figs. 8, 9<br>(Family: none) | 10 |
| Y | JP 2000-165440 A  (Fujitsu Ltd.),<br>16 June, 2000 (16.06.00),<br>Par. No. [0060]<br>(Family: none) | 19 |

Form PCT/ISA/210 (continuation of second sheet) (July 1998)